# EUROPEAN PATENT APPLICATION

(11) **EP 3 017 995 A1**
(43) Date of publication of application: **11.05.2016**
(21) Application number: 14191849.0
(22) Date of filing: 05.11.2014
(51) Int. Cl.: B60L 15/20, B60K 31/04, H02P 6/08

(54) **Adjustment method for speed-controlled electronic drive and apparatus for implementing the same**

(71) Applicant: ABB Technology Oy, 00380 Helsinki (FI)
(72) Inventor: Hakala, Heikki, 00380 Helsinki (FI); Leppinen, Tuomo, 00380 Helsinki (FI); Koivu, Ismo, 00380 Helsinki (FI)
(74) Representative: Kolster Oy Ab

(57) **Abstract**

The present disclosure describes an adjustment method and apparatus for implementing the method for a speed-controlled electric drive of an electric vehicle. In the method, a rotational speed of the electric drive is controlled by a frequency converter on the basis of a constrained speed reference. The method comprises determining the rotational speed, receiving an unconstrained speed reference, calculating the constrained speed reference on the basis of the unconstrained speed reference, wherein a rate of change of the constrained speed reference is limited to a predefined range, and if a value of the determined rotational speed is between the values of the constrained speed reference and the unconstrained speed reference, setting the value of the constrained speed reference the same as the value of the determined rotational speed.

## Description

### FIELD OF THE INVENTION

The present disclosure relates to speed-controlled electric drives of electric vehicles, and more particularly to adjustment of speed references of the drives.

### BACKGROUND INFORMATION

Typically electrical vehicles are powered by torque-controlled electric drives. However, in some applications, the use of a speed-controlled electric drive may be desirable. Certain benefits and savings may be achieved by using a speed controlled drive.

However, speed-controlled electric drives may pose challenges to the control system when the speed reference originates from an operator (e.g. a person) operating the vehicle, for example. The speed reference may originate from a speed pedal operated by the operator, for example. During accelerations and decelerations, the speed reference may change significantly during a short period of time. In the context of the present disclosure, the term "acceleration" refers to increase of speed, i.e. to speeding up. The term "deceleration" refers to decrease of speed, i.e. to slowing down. Further, if the speed reference originates from a speed pedal, the value of the speed reference may change frequently and the progress may become jerky. This may induce additional mechanical stress to the vehicle, which may generate additional repair and/or maintenance costs.

In order to achieve a well-defined and a more easily controllable speed-controlled control system, a rate of change of the requested speed reference may be constrained. If the requested speed reference changes too fast, the rate of change of the speed reference may be limited and ramped up (or down) slowly so that the level of the requested reference is reached in a controlled manner.

However, in certain situations, the ramped speed reference may differ significantly from the actual speed, which may induce unexpected behavior of the vehicle in the form of unexpected accelerating or decelerating torques to the vehicle. These torque spikes may induce additional mechanical stress to the vehicle and cause the vehicle to move jerkily.

For example, when an operator decelerates an electrical vehicle, the requested speed reference may be reduced (e.g. from 5000 rpm to 0 rpm) and mechanical brakes may be applied in order to slow down the vehicle. If the requested speed reference were ramped down, the ramped-down value of the speed reference would decrease relatively slowly. As a result, the actual speed could be lower than the ramped speed reference during decelerations. The actual speed might reach the requested speed reference level of 0 rpm, for example, while the ramped speed reference would not have yet reached the 0-rpm level. If the operator observed that the vehicle had already stopped, s/he might release the brakes. However, since the ramped speed reference would not yet have reached zero level, the vehicle would suddenly accelerate in order to reach the ramped speed reference. This unexpected behaviour could cause a dangerous situation. Further, in implementations where the torque induced by the electric drive is not limited to zero when the brakes are being applied, energy is wasted when the electric drive tries to accelerate while the mechanical brakes slow down the vehicle.

Even if the ramping of the requested speed reference is disabled for decelerations, the value of the ramped speed reference may be smaller than the actual speed during accelerations. For example, such a situation may arise when the speed of an electric vehicle is reduced by using mechanical brakes. When the brakes are being applied, the torque induced by the electric drive may be limited to zero. As a result, the speed is reduced by the brakes only. Both the requested speed reference and the ramped speed reference may fall below the actual speed. If the ramped speed reference is lower than the actual speed when the brakes are released, the electric drive may first decelerate in order to reach the ramped speed reference before starting to accelerate.

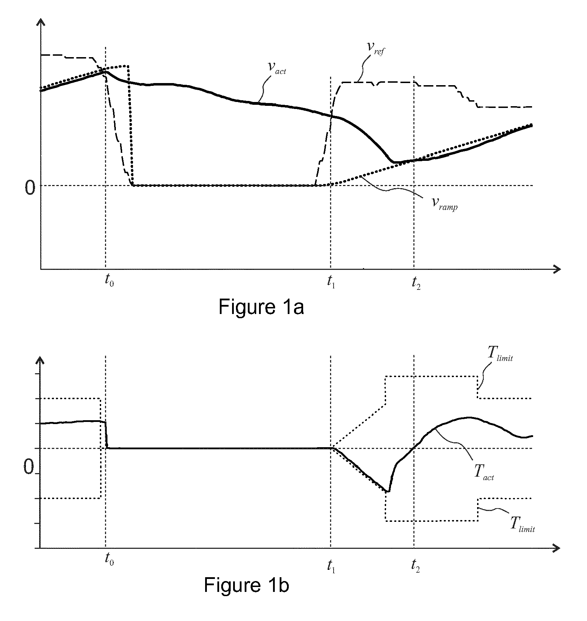

Figures 1 a and 1 b show exemplary curves of an electric vehicle during acceleration. In Figure 1a, the actual speed *v_{act}* of the vehicle is shown as a solid line. An unconstrained requested speed reference *v_{ref}* is shown as a dashed line. A ramped speed reference *vₐₘₚ* is shown as a dotted line. Figure 1a shows the acceleration being limited to a predefined (positive) level. In Figure 1b, the torque *T_{act}* generated is shown as a solid line. Constraints *Tₗᵢₘᵢₜ* limiting the magnitude and rate of change of the torque during acceleration are shown as dotted lines in Figure 1b.

At time instant *t*₀ in Figures 1a and 1b, the mechanical brakes are applied, the torque *T_{act}* is limited to zero, and the vehicle starts to slow down. The actual speed *v_{act}* decreases relatively slowly, and the requested speed reference *v_{ref}* and the ramped speed reference *vᵣₐₘₚ* fall below the actual speed *v_{act}*. Close to instant *t*₁, the operator wants to accelerate the vehicle again (e.g. by pressing a speed pedal). The brakes are released and the requested speed reference *v_{ref}* rises. At instant *t*₁, the ramped speed reference *vₐₘₚ* starts to climb linearly in response to the change in the requested speed reference *v_{ref}*. However, since the actual speed *v_{act}* is higher than the ramped reference *vᵣₐₘₚ*, a negative value for the torque *T_{act}* is applied in order to minimize the difference. The actual speed *v_{act}* starts to fall. At instant *t*₂, the actual speed *v_{act}* falls below the ramped reference, and a positive value for the torque *T_{act}* is generated, thereby accelerating the vehicle.

As shown in Figures 1a and 1b, the electric drive decelerates between instants *t*₁ and *t*₂ when it in fact should be accelerating. With ramped speed references, progress of an electric vehicle may be jerky, and the vehicle may have a poor control response to the actions of the operator. A frequency converter controlling the electric drive may generate undesired torque spikes. Tuning of parameters of the electric drive may be a complex task (sometimes even an impossible task).

### BRIEF DISCLOSURE

An object of the present invention is to provide a method and an apparatus for implementing the method so as to alleviate the above disadvantages. The objects of the invention are achieved by a method and an apparatus which are characterized by what is stated in the independent claims. The preferred embodiments of the invention are disclosed in the dependent claims.

In a method according to the present disclosure, a rotational speed of an electric drive may be controlled on the basis of a ramped speed reference. The ramped reference may be generated by limiting the rate of change of a requested speed reference which is originated from an operator operating the vehicle. The method monitors the relation between the requested speed reference, the ramped reference, and the actual rotational speed of the vehicle. If the actual speed is between the requested speed reference and the ramped reference, the ramped reference is given the value of the actual speed. Thus, large gaps between the ramped reference and the actual speed can be avoided. As a result, also the unexpected behavior at acceleration and deceleration can be avoided.

The method according to the present disclosure is well suited for vehicular electric drives. With the method, ramps may be used for both accelerations and decelerations. Since the speed control is able to use ramps, accelerations and decelerations can be performed smoothly and in a controlled manner. The control response of the vehicle to the operator's control actions is more predictable and pleasant. The method can be implemented directly in a frequency converter controlling a motor of the electric vehicle.

### BRIEF DESCRIPTION OF THE DRAWINGS

In the following the invention will be described in greater detail by means of preferred embodiments with reference to the attached drawings, in which
Figures 1 a and 1 b show exemplary curves of an electric vehicle during acceleration;
Figure 2 shows a simplified block diagram of an exemplary method according to the present disclosure; and
Figure 3 shows exemplary curves of operation of the method according to the present disclosure.

### DETAILED DISCLOSURE

The present disclosure presents an adjustment method for a speed-controlled electric drive of an electric vehicle. In the method, a rotational speed of the electric drive is controlled by a frequency converter on the basis of a constrained speed reference.

The method comprises determining the actual rotational speed of the vehicle, receiving an unconstrained speed reference for the vehicle, calculating the constrained speed reference on the basis of the unconstrained speed reference, and setting the value of the constrained speed reference the same as the value of the determined rotational speed, if the determined rotational speed is between the constrained speed reference and the unconstrained speed reference. After updating the value of the constrained speed reference, the constrained speed reference may continue ramping up (or down) from the updated value. The term "unconstrained speed reference" refers in the context of the present disclosure to a requested, unconstrained speed reference that may be generated on the basis of input by an operator operating the electric vehicle. The unconstrained speed reference may be responsive to a control pedal actuated by the operator, for example. However, the meaning of the term "operator" is not limited to a person operating the vehicle. An operator may be a higher level control system producing the requested speed reference for the vehicle, for example. Thus, the electric vehicle may be an automated, driverless vehicle, for example.

The present disclosure further discloses an apparatus implementing the method. The apparatus may be a frequency converter comprising means for carrying out the method according to any one of previous claims, for example. If the method is implemented in a frequency converter, the actual rotational speed is typically available as an operating parameter of the frequency converter. Thus, the actual rotational speed may be determined without additional sensors. The unconstrained speed reference may be received in a frequency converter as an input.

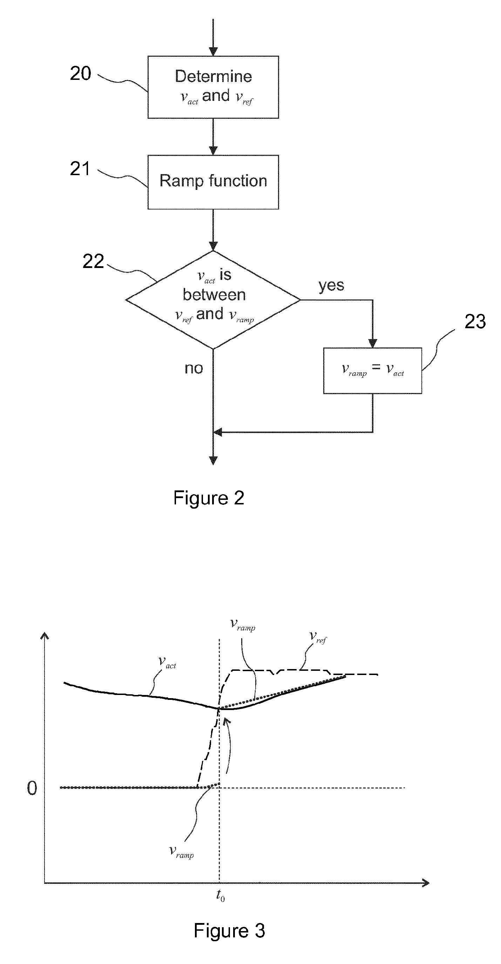

Figure 2 shows a simplified block diagram of an operational cycle of an exemplary method according to the present disclosure implemented in a frequency converter. In Figure 2, an actual speed *v_{act}* of an electric vehicle and an unconstrained speed reference *v_{ref}* are determined in step 20. The actual speed *v_{act}* may be determined by the frequency converter, and the unconstrained speed reference *v_{ref}* may be an input of the frequency converter.

In a method according to the present disclosure, the constrained speed reference is responsive to the unconstrained speed reference. However, the constrained speed reference may be run through a ramp function, i.e. a rate of change of the constrained speed reference may be limited to a predefined range. The magnitude of acceleration of the vehicle may be limited to a predetermined first limit, for example. In addition, the magnitude of deceleration of the vehicle may also be limited by a predetermined second limit. The magnitudes of the first and second limit may differ from each other. If the rate of change of the unconstrained reference is within the limits defined for the constrained speed reference, the constrained speed reference may have the same value as the unconstrained reference. However, if the rate of change of the unconstrained reference exceeds a predetermined limit, the rate of change of the constrained reference is constrained to the limit so that the constrained reference forms a linear ramp.

In Figure 2, a constrained speed reference *vᵣₐₘₚ* is first formed from an unconstrained speed reference *v_{ref}* by a ramp function in step 21. The ramp function may operate as described above.

In a method according to the present disclosure, if a value of the determined actual rotational speed is between the values of the constrained speed reference and the unconstrained speed reference, the value of the constrained speed reference may be set the same as the value of the actual rotational speed. For example, if the unconstrained speed reference is higher than the actual speed and the constrained speed reference is lower than the actual speed, the constrained speed reference may be given the value of the actual speed. In a similar manner, if the unconstrained speed reference is lower than the actual speed and the constrained speed reference is higher than the actual speed, the constrained speed reference may be given the value of the actual speed. The relations between the requested, unconstrained speed reference, the ramped reference, and the actual rotational speed may be monitored sequentially. A method according to the present disclosure may check if a value of the actual rotational speed is between the values of the constrained speed reference and the unconstrained speed reference every time the ramp function is executed, for example.

In Figure 2, in step 22, the actual speed *v_{act}* is compared with the constrained speed reference *vᵣₐₘₚ* and the unconstrained speed reference *v_{ref}*. If the actual speed *v_{act}* is not between the values of the constrained speed reference *vᵣₐₘₚ* and the unconstrained speed reference *v_{ref}*, the constrained speed reference *vₐₘₚ* remains unchanged by the method of Figure 2. However, if the rotational speed *v_{act}* is between the values of the constrained speed reference *vᵣₐₘₚ* and the unconstrained speed reference *v_{ref}*, the constrained speed reference *vᵣₐₘₚ* is set to the value of the actual speed *v_{act}* in step 23.

Figure 3 shows exemplary curves of operation of the method of Figure 2. Similar to Figure 1, an electric vehicle is slowing down and the torque is limited to zero before time instant *t*₀. Near instant *t*₀, the unconstrained speed reference starts to rise again. At instant *t*₀, the unconstrained speed reference *v_{ref}* exceeds the actual speed *v_{act}*. The actual speed *v_{act}* is between the constrained speed reference *vᵣₐₘₚ* and the unconstrained speed reference *v_{ref}*, and thus, the method sets the constrained speed reference *vₐₘₚ* to the value of the actual speed *v_{act}*. The constrained speed reference continues its climb from this updated value. The actual speed *v_{act}* is below the constrained reference *vᵣₐₘₚ* and, in order to reach the constrained reference *vᵣₐₘₚ*, the frequency converter correctly applies a positive torque and the vehicle starts to accelerate.

It will be obvious to a person skilled in the art that the inventive concept may be implemented in various ways. The invention and its embodiments are not limited to the examples described above but may vary within the scope of the claims.

## Claims

1. An adjustment method for a speed-controlled electric drive of an electric vehicle, wherein a rotational speed of the electric drive is controlled by a frequency converter on the basis of a constrained speed reference, wherein the method comprises
determining the rotational speed,
receiving an unconstrained speed reference,
calculating the constrained speed reference on the basis of the unconstrained speed reference, wherein a rate of change of the constrained speed reference is limited to a predefined range, and,
if a value of the determined rotational speed is between the values of the constrained speed reference and the unconstrained speed reference, setting the value of the constrained speed reference the same as the value of the determined rotational speed.

2. An adjustment method according to claim 1, wherein the unconstrained speed reference is generated on the basis of input by an operator operating the electric vehicle.

3. An adjustment method according to claim 1 or 2, wherein the magnitude of acceleration of the vehicle is limited by a predetermined limit.

4. An adjustment method according to any one of the previous claims, wherein the magnitude of deceleration of the vehicle is limited by a predetermined limit.

5. A frequency converter comprising means for carrying out the method according to any one of the previous claims.
